# EUROPÄISCHE PATENTSCHRIFT

(11) **EP 0 921 380 B1**
(45) Veröffentlichungstag und Bekanntmachung des Hinweises auf die Patenterteilung: **14.04.2004**
(21) Anmeldenummer: 98122817.4
(22) Anmeldetag: 01.12.1998
(51) Int. Cl.: G01G 19/18

(54) **Wiegevorrichtung für Absetzkipper u. dgl.**
Weighing apparatus for a tipping container vehicle and the like
Dispositif de pesage pour camion à benne basculante et camions similaires

(30) Priorität: 05.12.1997 DE 19753913
(43) Veröffentlichungstag der Anmeldung: 09.06.1999
(73) Patentinhaber: Pfreundt GmbH, 46354 Südlohn (DE)
(72) Erfinder: Wissing, Ludger, 48712 Gescher (DE); Dankelmann, Georg, 48691 Vreden (DE)
(74) Vertreter: Habbel, Ludwig (Lutz), Dipl.-Ing.

(56) Entgegenhaltungen:
- EP-A- 0 143 713
- EP-A- 0 647 836
- BE-A- 905 929
- DE-A- 4 026 561
- DE-U- 29 600 676

## Beschreibung

Die Erfindung betrifft eine Wiegevorrichtung nach dem Oberbegriff des Anspruches 1.

Bei schwenkbeweglich aufgehängten Mulden, wie sie beispielsweise bei Absetzkippern mittels eines Kettengehänges an einem beweglichen Hubarm vorgesehen sind, besteht das Problem, das Muldengewicht und daraus resultierend die geladene Nutzlast korrekt zu erfassen. Wiegeeinrichtungen, die im Bereich des Gelenkes vorgesehen sind, an dem die Mulde gelagert ist, weisen den Nachteil auf, daß sie an einer exponierten Stelle angeordnet sind, so daß beispielsweise Beschädigungen der Wiegeeinrichtung durch Äste möglich sind, wenn ein Absetzkipper durch einen baumbestandenen Weg fährt, um zu einer Deponie zu gelangen. Die Problematik ist bei Baggeschaufeln, Krangreifern und ähnlichen Bauteilenn ähnlich gegeben.

Aus DE 40 26 561 A ist eine Wiegevorrichtung bekannt, mit einem Schwenkbeschlag der einen Wiegestab aufweist, wovon der Achse mit der Schwenkachse des Schwenkbeschlags zusammenfalt. Unterhalb des Wiegestabes ist ein Schwenklager vorgesehen mit einer Schwenkachse parallel zur Achse des Wiegestabes.

Aus BE 905 929 A ist eine Wiegevorrichtung bekannt, die z.B. in eine Kette an einem Hubarm integriert werden kann. Die Wiegevorrichtung weist einen nicht gelagerten Wiegestab auf.

Aus der EP 543 440 A1 ist eine gattungsgemäße Wiegevorrichtung bekannt, bei der der Schwenkbeschlag mit einem zweiteiligen Gehäuse ausgestaltet ist. Der eigentliche Meßwertaufnehmer ist als Verbindungsbauteil ausgestaltet, welches die beiden Gehäusehälften des Schwenkbeschlags verbindet und eine Schwenkbewegung der beiden Gehäusehälften um eine Achse ermöglicht, die parallel zu der fahrzeugseitigen Schwenkachse liegt.

Quer dazu angreifende Kräfte, wie sie beim Pendeln der Last auftreten können, können daher den Meßwertaufnehmer unzulässig belasten und falsche Meßergebnisse hervorrufen. Bei entsprechend starker Überlastung des Meßwertaufnehmers können sogar dauerhafte Falschmessungen resultieren, so daß die Wiegevorrichtung neu geeicht werden muß.

Eine Schwenkbeweglichkeit in anderen Richtungen soll durch ein Lager mit Kugelauschnittsförmiger Oberffläche ermöglicht werden, welches oberhalb des Meßwertaufnehmers in der oberen Gehäusehälfte angeordnet ist. Eine weitere Schwenkachse ist quer zu der fahrzeugseitigen Schwenkachse verlaufend in der oberen Gehäusehälfte vorgesehen. Durch die vielen Schwenkachsen und den zweiteiligen Gehäuseaufbau weist die gattungsgemäße Wiegevorrichtung eine große Bauhöhe auf, die je nach Anwendungsgebiet hinderlich sein kann.

Aus der DE 40 38 374 C1 ist eine Wiegevorrichtung bekannt, bei der ein Schlitten beweglich in einem offenen Rahmen geführt ist. In der Praxis ergeben sich vielfältige Verschmutzungsmöglichkeiten für diese Führung, so daß Kraftnebenschlüsse und damit Falschmessungen nicht zuverlässig ausgeschlossen werden können. Schwenkbewegeungen sind durch eine Lagerung nach dem Prinzip "Schneide und Pfanne" möglich. In der Praxis können beim Überfahren von Unebenheiten insbesondere bei beladenem Fahrzeug erhebliche Schläge auftreten, die eine derartige Lagerung schädigen können.

Der Erfindung liegt die Aufgabe zugrunde, eine gattungsgemäße Wiegevorrichtung dahingehend zu verbessern, daß eine kompakte, geschützte und mechanisch unempfindliche Konstruktion ermöglicht wird, die Wiegeergebnisse mit sehr hoher Genauigkeit ermöglicht.

Diese der Erfindung zugrundeliegende Aufgabe wird durch eine Wiegevorrichtung mit den Merkmalen des Anspruches 1 gelöst.

Die Erfindung schlägt mit anderen Worten vor, die eigentliche Wägezelle als Wiegestab auszugestalten, der an sich schon robust ist und der durch die Anordnung innerhalb des Schwenkbeschlages gut geschützt ist. Kräfte, die eine Schwenkbewegung um den Wiegestab bewirken, belasten den Wiegestab nicht unzulässig, da er eine Schwenkachse für derartige Bewegungen bildet. Kräfte, die demgegenüber eine Pendelbewegung in Längsrichtung Wiegestab bewirken, belasten den Wiegestab ebenfalls nicht unzulässig, da unterhalb des Wiegestabes ein Schwenklager für derartige Bewegungen vorgesehen ist. Der Wiegestab als Meßwertaufnehmer wird daher von der Übertragung von Schwenkbewegungen völlig freigehalten und lediglich durch die Gewichtskraft der angehängten Last belastet.

Preisgünstig herstellbar und einfach montierbar kann ein beispielsweise zwei- oder mehrteiliger Ring vorgesehen sein, der um den Wiegestab drehbar ist und die Schwenkbewegung um den Wiegestab ermöglicht. Langlebig, staub- wasserdicht sowie wartungsfrei kann dieser Ring vorteilhaft an seinen beiden Enden gegenüber dem Wiegestab gekapselt sein.

Beschädigungen der Wiegevorrichtung durch Äste oder andere Hindernisse, an denen sie hängenbleiben könnte, werden durch eine gerundete Außenkontur weitestgehend vermieden.

Wenn der Wiegestab an seinen beiden Enden auf quer zu seiner Längsachse verlaufenden Lagerstäben aufliegt, die ein nach oben ausgebauchtes, z.B. balliges Querschnittsprofil aufweisen, oder die preisgünstig als handlesübliche Rundstähle ausgestaltet sind, kann die lastabhängige Durchbiegung des Wiegestabs frei von Behinderungen und von unzulässigen, die Meßgenauigkeit gefährdenden Verformungen erfolgen.

Weitere vorteilhafte Ausgestaltungen der Erfindung sind den Unteransprüchen entnehmbar.

Ausführungsbeispiele der Erfindung werden anhand der Zeichnungen im folgenden näher erläutert. Dabei zeigt
- Fig. 1: einen ersten Schwenkbeschlag in Seitenansicht,
- Fig. 2: eine Stirnansicht auf den Schwenkbeschlag von Fig. 1,
- Fig. 3: einen Querschnitt durch den Schwenkbeschlag von Fig. 1,
- Fig. 4: ein zweites Ausführungsbeispiel eines Schwenkbeschlages in einer Ansicht ähnlich Fig. 1,
- Fig. 5: eine Stirnansicht auf den Schwenkbeschlag von Fig. 4, und.
- Fig. 6: einen Querschnitt durch den Schwenkbeschlag von Fig. 4.

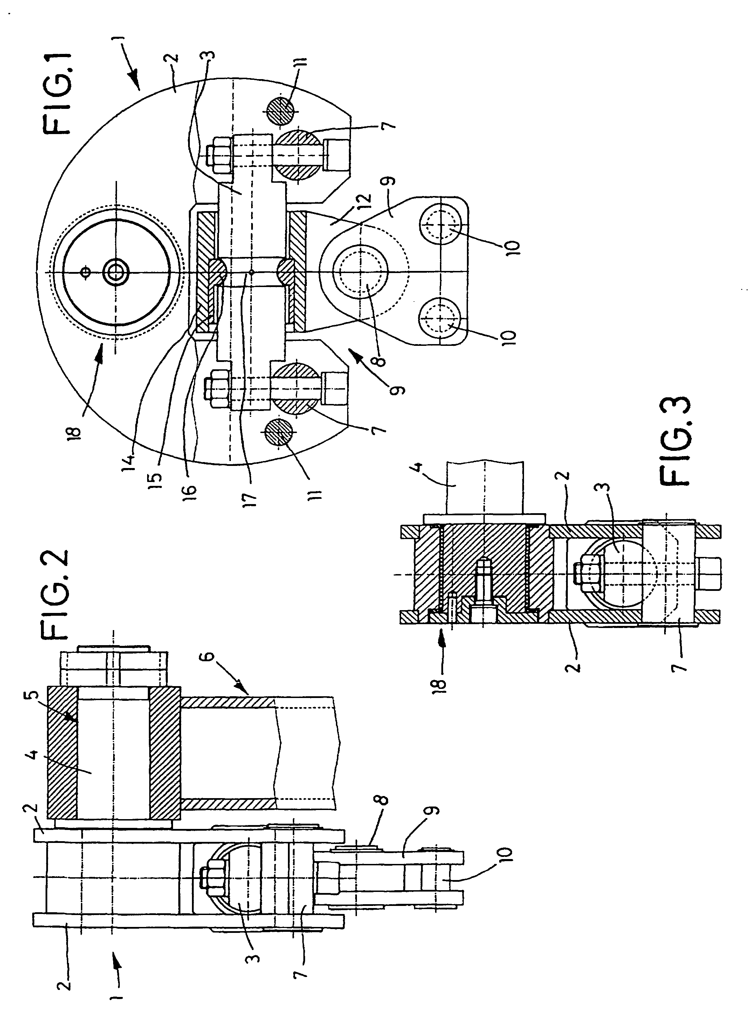

In Fig. 1 ist mit 1 allgemein ein Schwenkbeschlag bezeichnet, der - wie auch aus Fig. 2 ersichtlich ist - zwei etwa kreisausschnittsförmtige Grundplatten 2 aufweist, zwischen denen ein Wiegestab 3 angeordnet ist. Der Schwenkbeschlag 1 weist einen Haltebolzen 4 auf, der als Austauschbauteil anstelle eines Gelenkzapfens in eine Gelenkbohrung 5 eines Hubarmes 6 eingesetzt ist. Der Hubarm 6 ist Teil eines Absetzkippers und ermöglicht durch seine Beweglichkeit das Aufnehmen einer Mulde, beispielsweise eines Abfallcontainers, auf das Fahrzeug bzw. das Absetzen der Mulde von dem Fahrzeug.

Rein beispielhaft wird im folgenden stets die "Mulde" erwähnt, wobei dieser Begriff allgemein für die die Nutzlast aufnehmenden Lade- oder Greifbauteile an einem Fahrzeug steht und beispielsweise auch einen magnetischen oder mechanischen Krangreifer, eine Baggerschaufel oder dergleichen bezeichnen kann.

An seinen beiden äußeren Enden ist der Wiegestab 3 über zwei aus Rundstählen gebildete Auflager 7 zwischen den beiden Grundplatten 2 gelagert. Längsbewegungen und Durchbiegungen des Wiegestabs 3 werden durch eine drehbewegliche Lagerung der beiden Auflager 7 ermöglicht, so daß Verspannungen innerhalb des Wiegestabes 3, die zu einer Verfälschung der Meßergebnisse führen könnten, ausgeschlossen werden können.

Im unteren Bereich ist zwischen den beiden Grundplatten 2 mittels eines Schwenkbolzens 8 eine Schwenkachse vorgesehen, um die ein Einhängeblech 9 schwenkbeweglich gelagert ist. Das Einhängeblech 9 verfügt über Querbolzen 10 zur Anbringung eines Kettengehänges, welches wiederum die aufzunehmende bzw. abzusetzende Mulde hält. Die Grundplatten 2 sind durch Traversen 11 miteinander verbunden, wobei die Traversen 11 an die Grundplatten geschweißt sind.

Die Gewichtskräfte der Nutzlasten werden durch das Einhängeblech 9 und den Schwenkbolzen 8 auf eine Lasche 12 übertragen, die an eine Hülse 14 anschließt, welche wiederum einen Ring 15 umgreift. Der Ring stellt das eigentliche, auf den Wiegstab 3 einwirkende Druckübertragungsbauteil dar und weist eine Wulst 16 auf, die in einer Nut 17 des Wiegestabes 3 aufgenommen ist und sicherstellt, daß die Krafteinleitung in den Wiegestab 3 stets an derselben, definierten Stelle erfolgt, an der korrekte Meßergebnisse sichergestellt sind. Der Ring 15 ist zugunsten einer einfachen Montage mehrteilig aufgebaut und weist zwei oder mehr, jeweils einen Teilkreis umschließende Teile auf.

Schwenk- oder Pendelbewegungen der Mulde in Längsrichtung des Fahrzeugs weren problemlos durch ein insbesondere aus Fig. 3 ersichtliches Schwenklager 18 aufgenommen. Sollte das am Fahrzeug, also am Hubarm 6 vorgesehene Schwenklager durch die betriebliche Beanspruchung ausgeschlagen sein, so beeinflußt dieser Verschleiß die Korrektheit der Wiegeergebnisse nicht: Der Haltebolzen 4 ersetzt den Lagerbolzen des Fahrzeugs und führt keine Schwenkbewegung aus. Diese kann vielmehr ausschließlich um das Schwenklager 18 und den Schwenkbolzen 8 erfolgen. Der Schwenkbolzen 8 stellt dabei sicher, daß keine unzulässigen Kräfte auf den Wiegestab 3 einwirken.

Schwenk- oder Pendelbewegungen der Mulde quer zur Längsrichtung des Fahrzeugs werden problemlos durch das Schwenklager aufgenommen, welches der Wiegestab 3 zusammen mit dem Ring 15 und der Hülse 14 bildet. Eine Aussparung 19 in den Grundplatten 2 stellt sicher, daß diese Pendelbewegungen nicht behindert werden und zu unzulässigen Krafteinleitungen in den Wiegestab 3 führen können.

Die Auswerteelektronik für die Wiegeergebnisse kann geschützt zwischen den beiden Grundplatten 2 vorgesehen sein: entweder in einem einzigen Gehäuse, so daß Kabelverbindungen zwischen mehreren Baugruppen nicht nötig sind oder in mehreren, an vorhandene Freiräume zwischen den Grundplatten 2 angepaßten Gehäusen, so daß die Außenabmessungen des Schwenkbeschlags möglichst kompakt gehalten sein können.

Die Energieversorgung für die Durchführung der Messungen kann durch ein Solarmodul erfolgen, welches einen Akkumulator oder einen ähnlichen, wiederaufladbaren Energiespeicher mit Energie versorgt. Das Solarmodul ist vorzugsweise ebenfalls geschützt zwischen den beiden Grundplatten 2 angeordnet.

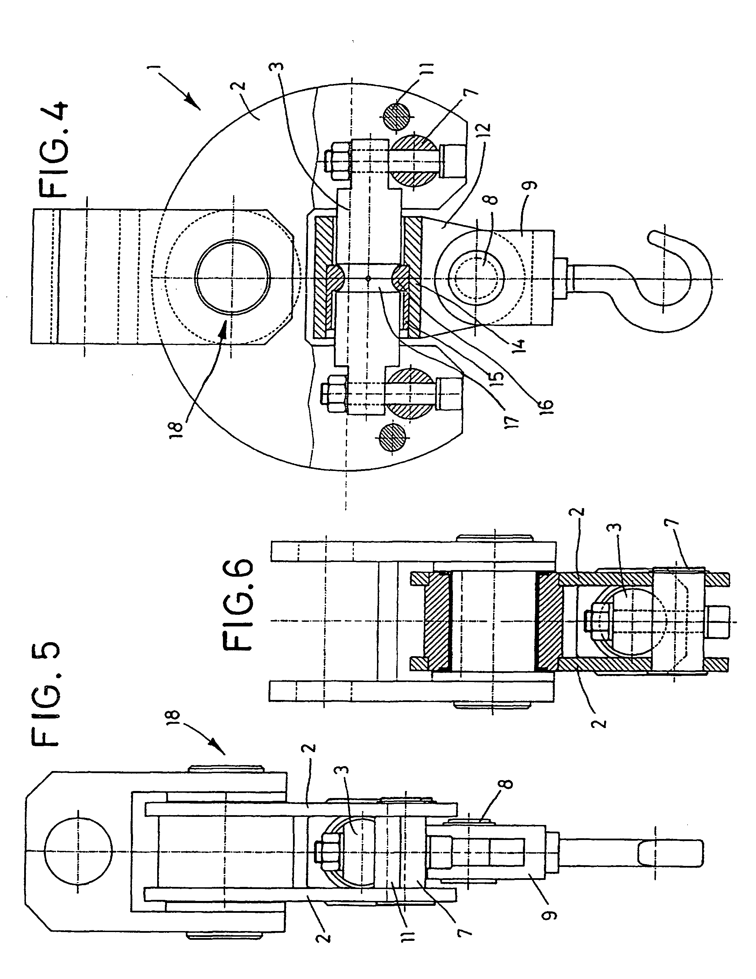

In Fig. 4 ist ein zweites Ausführungsbeispiel eines Schwenkbeschlages 1 dargestellt. Im Unterschied zum ersten Ausführungsbeispiel der Fig. 1 bis 3 weist hier das Einhängeblech 9 den Lasthaken eines Krans auf. Der grundsätzliche Aufbau des Schwenkbeschlages 1 ist im wesentlichen dem des ersten Ausführungsbeispiels gleich, er ist lediglich an die kranseitigen Aufnahmemittel angepaßt. Vergleichbare Bauteile sind daher mit denselben Bezugszeichen wie in den Fig. 1 bis 3 gekennzeichnet.

In Abweichung von den dargestellten Ausführungsbeispielen kann vorgesehen sein, anstelle des in den Fig. 1 bis 3 dargestellten Haltebolzens 4 den fahrzeugseitigen vorhandenen Lagerzapfen zu verwenden und den Schwenkbeschlag daran zu befestigen. Auf diese Weise müssen herstellerseitig keine unterschiedlich bemessenen Haltebolzen zur Anpassung an die unterschiedlichen Gelenkformate der Fahrzeuge bevorratet werden. Ein Verschleiß des fahrzeugseitigen Gelenks fällt dabei für die Korrektheit der Meßergebnisse kaum ins Gewicht, da die Schwenkbeweglichkeit der Mulde durch das schwenkbeweglich gelagerte Einhängeblech 9 ermöglicht ist.

## Patentansprüche

1. Wiegevorrichtung für ein schwenkbeweglich hängend gelagertes, die Nutzlast aufnehmendes Lade- oder Greifbauteil an einem Fahrzeug, wie die Mulde an einem Absetzkipper, der Greifer an einem Kran oder die Schaufel an einem Bagger,
mit einem Schwenkbeschlag (1), der einerseits an der fahrzeugseitigen Schwenkachse festlegbar ist, und der andererseits eine Aufnahme für das Lade- oder Greifbauteil schafft,
**dadurch gekennzeichnet, daß** der Schwenkbeschlag (1) einen Wiegestab (3) aufweist, der an seinen beiden Enden gelagert und mit dem Schwenkbeschlag (1) verbunden ist, und an den in seinem mittleren Bereich ein Druckübertragungsbauteil zur Einleitung der Gewichtskraft des Lade- oder Greifbauteils anschließt, wobei der Wiegestab (3) als quer zur fahrzeugseitigen Schwenkachse liegende Drehachse ausgebildet ist, und wobei unterhalb des Wiegestabes (3) ein Schwenklager (8) mit einer zur fahrzeugseitigen Schwenkachse parallelen Schwenkachse vorgesehen ist.

2. Wiegevorrichtung nach Anspruch 1, **dadurch gekennzeichnet, daß** das Druckübertragungsbauteil als drehbar um den Wiegestab (3) gelagerter Ring (15) ausgestaltet ist.

3. Wiegevorrichtung nach Anspruch 1 oder 2, **dadurch gekennzeichnet, daß** der Ring (15) an seinen beiden Enden gegenüber dem Wiegestab (3) wasserdicht gekapselt ist.

4. Wiegevorrichtung nach einem der vorhergehenden Ansprüche, **gekennzeichnet durch** eine gerundet verlaufende Außenkontur.

5. Wiegevorrichtung nach einem der vorhergehenden Ansprüche, **dadurch gekennzeichnet, daß** der Wiegestab (3) an seinen beiden Enden auf quer zu seiner Längsachse verlaufenden Auflagern (7) aufliegt, die ein nach oben ausgebauchtes Querschnittsprofil aufweisen.

6. Wiegevorrichtung nach einem der vorhergehenden Ansprüche, **gekennzeichnet durch** ein Funkmodul zum Aussenden der Meßdaten.

7. Wiegevorrichtung nach Anspruch 4, **dadurch gekennzeichnet, daß** das Funkmodul zur bidirektionalen Datenübertragung ausgestaltet ist.

8. Wiegevorrichtung nach einem der vorhergehenden Ansprüche, **gekennzeichnet durch** einen von der Energieversorgung des Fahrzeugs unabhängigen Energiespeicher.

9. Wiegevorrichtung nach Anspruch 6, **gekennzeichnet durch** ein Solarmodul zur Energieversorgung des wieder aufladbar ausgestalteten Energiespeichers.

## Claims

1. Weighing apparatus for a loading or grabbing component of a vehicle, such as the trough body of a tipping container vehicle, the grab of a crane or the shovel of an excavator, which loading or grabbing component is suspended swivellably and holds the working load, said weighing apparatus having a swivel fitting (1) which is attachable on one side to the swivel pin mounted to the vehicle and on the other side provides a mounting for the loading or grabbing component, **characterised in that** the swivel fitting (1) includes a weighing bar (3) which is supported at both ends and connected to the swivel fitting (1) and which is connected in its middle portion to a pressure transducing component for transmitting the weight of the loading or grabbing component, the weighing bar (3) being configured as a swivel shaft disposed transversely to the swivel pin mounted on the vehicle, and a swivel bearing (8) having a swivel axis parallel to that of the swivel pin mounted on the vehicle being provided below the weighing bar (3).

2. Weighing apparatus according to claim 1, **characterised in that** the pressure transducing component is configured as a ring (15) mounted rotatably around the weighing bar (3).

3. Weighing apparatus according to claim 1 or 2, **characterised in that** the ring (15) is sealed at both ends in a watertight manner with respect to the weighing bar (3).

4. Weighing apparatus according to any one of the preceding claims, **characterised by** a rounded outer contour.

5. Weighing apparatus according to any one of the preceding claims, **characterised in that** the weighing bar (3) rests at both ends on supports (7) having an upwardly convex profile in cross-section and disposed transversely to its longitudinal axis.

6. Weighing apparatus according to any one of the preceding claims, **characterised by** a radio module for transmitting the measurement data.

7. Weighing apparatus according to claim 4, **characterised in that** the radio module is configured for bidirectional data transmission.

8. Weighing apparatus according to any one of the preceding claims, **characterised by** energy storage means independent of the power supply of the vehicle.

9. Weighing apparatus according to claim 6, **characterised by** a solar module for supplying energy to the rechargeable energy storage means.

## Revendications

1. Mécanisme de pesage pour un élément de chargement ou de préhension supporté de manière suspendue avec possibilité de pivotement et recevant la charge utile, sur un véhicule, comme la benne d'un camion à benne basculante, le grappin d'une grue ou la pelle d'une pelleteuse, avec une ferrure pivotante (1) pouvant être fixée d'une part sur l'axe de pivotement du côté du véhicule et créant d'autre part un réceptacle pour l'élément de chargement ou de préhension, **caractérisé en ce que** la ferrure pivotante (1) présente une barre de pesée (3) qui est supportée à ses deux extrémités et reliée à la ferrure pivotante (1), et à laquelle se raccorde dans sa partie médiane un élément transmettant la pression destiné à transmettre le poids de l'élément de chargement ou de préhension, la barre de pesée (3) étant conformée comme un axe de rotation perpendiculaire à l'axe de pivotement du côté du véhicule, et un palier de pivotement (8) avec un axe de pivotement parallèle à l'axe de pivotement du côté du camion étant prévu en-dessous de la barre de pesée (3).

2. Mécanisme de pesage selon la revendication 1, **caractérisé en ce que** l'élément transmettant la pression est conformé comme un anneau (15) supporté avec possibilité de rotation autour de la barre de pesée (3).

3. Mécanisme de pesage selon la revendication 1 ou 2, **caractérisé en ce que** l'anneau (15) est encapsulé à ses deux extrémités de manière étanche à l'eau par rapport à la barre de pesée (3).

4. Mécanisme de pesage selon l'une ou l'ensemble des revendications précédentes, **caractérisé en ce que** son contour extérieur est arrondi.

5. Mécanisme de pesage selon l'une ou l'ensemble des revendications précédentes, **caractérisé en ce que** la barre de pesée (3) repose à ses deux extrémités sur des appuis (7) perpendiculaires à son axe longitudinal, qui présentent un profil en section bombée vers le haut.

6. Mécanisme de pesage selon l'une ou l'ensemble des revendications précédentes, **caractérisé en ce qu'**il comporte un module radio pour la transmission des données de mesure.

7. Mécanisme de pesage selon la revendication 4, **caractérisé en ce que** le module radio est équipé en vue d'une transmission bidirectionnelle de données.

8. Mécanisme de pesage selon l'une ou l'ensemble des revendications précédentes, **caractérisé en ce qu'**il comprend une réserve d'énergie indépendante de l'alimentation en énergie du véhicule.

9. Mécanisme de pesage selon la revendication 6, **caractérisé en ce qu'**il comporte un module solaire pour l'alimentation en énergie de la réserve d'énergie conçue pour être rechargeable.
